# EUROPÄISCHE PATENTSCHRIFT

(11) **EP 2 186 149 B1**
(45) Veröffentlichungstag und Bekanntmachung des Hinweises auf die Patenterteilung: **17.08.2011**
(21) Anmeldenummer: 08784516.0
(22) Anmeldetag: 16.06.2008
(51) Int. Cl.: H01M 2/16

(54) **VLIESSTOFF MIT PARTIKELFÜLLUNG**
NON-WOVEN MATERIAL WITH PARTICLE FILLING
NONTISSÉ REMPLI DE PARTICULES

(30) Priorität: 07.09.2007 DE 102007042554
(43) Veröffentlichungstag der Anmeldung: 19.05.2010
(73) Patentinhaber: Carl Freudenberg KG, 69469 Weinheim (DE)
(72) Erfinder: KRITZER, Peter, 67147 Forst (DE); WEBER, Christoph, 69514 Laudenbach (DE); WAGNER, Rudolf, 79379 Müllheim (DE); SCHARFENBERGER, Gunter, 67227 Frankenthal (DE); ROTH, Michael, 55118 Mainz (DE)
(74) Vertreter: Ripper, Monika Sigrid
(86) Internationale Anmeldenummer: PCT/EP2008/004824
(87) Internationale Veröffentlichungsnummer: WO 2009/033514

(56) Entgegenhaltungen:
- EP-A- 1 724 395
- WO-A-2006/062153
- DE-A1- 3 125 751
- DE-A1- 10 238 944
- DE-A1- 10 347 568
- US-A1- 2005 208 383

## Beschreibung

### Technisches Gebiet

Die Erfindung betrifft eine Lage gemäß dem Oberbegriff des Patentanspruchs 1.

### Stand der Technik

Aus der DE 102 38 944 A1 ist eine Lage aus einem Vlies aus Polymerfasern bekannt, welches eine keramische Beschichtung aufweist. Aus der US 200510208383 A1 ist eine Lage bekannt, bei der ein poröser Körper mindestens einseitig mit einer Harzbeschichtung versehen ist Die WO 2006/062153 A1 offenbart einen porösen Körper, in welchem Partikel und ein Harz aufgenommen sind. Die DE 31 25 751 A1 offenbart eine Lage, welche anorganische Partikel enthält Diese Partikel werden gemeinsam mit Polyolefinzellstofffasern in einen Brei eingearbeitet. Auf die Lage sind Prägenuten aufgebracht. Aus der DE 103 47 568 A1 ist ein poröser Körper bekannt, der mit einer keramischen Beschichtung versehen ist

Lagen der genannten Art sind aus dem Stand der Technik bereits bekannt. Solche Lagen werden als Separatoren in Batterien und Kondensatoren eingesetzt, die der Energiespeicherung dienen. Die Ladungsspeicherung in Batterien und Kondensatoren findet chemisch, physikalisch oder in einer Mischform, z. B. durch Chemisorption, statt.

Um eine interne Entladung innerhalb der Batterie oder des Kondensators zu vermeiden, werden entgegengesetzt geladene Elektroden mechanisch durch nicht elektronenleitende Materialien, so genannte Separatoren oder Spacer, voneinander getrennt. Zugleich ermöglichen die Separatoren oder Spacer auf Grund ihrer dem Energiespeichersystem und dessen Anwendung angepassten Porosität den Transport ionischer Ladungsträger eines Elektrolyten zwischen den Elektroden.

Die aus dem Stand der Technik bekannten Separatoren zeigen kleine, miteinander vernetzte Öffnungen im Mikrometerbereich. Diese Öffnungen sollen möglichst groß sein, damit die Elektrolytleitfähigkeit im getränkten Separator möglichst hoch ist und die Batterie somit eine hohe Leistungsdichte aufweist. Sind die Öffnungen jedoch zu groß, dann können Metalldendriten zu einem Kurzschluss zwischen den beiden eigentlich elektrisch voneinander zu trennenden Elektroden führen. Die Metalldendriten bestehen entweder aus Lithium oder aus anderen Metallen, die als Verunreinigungen in der Batterie vorliegen können.

Des Weiteren können Partikel aus elektrisch leitfähigen Elektrodenmaterialien durch die Öffnungen wandern. Auf Grund dieser Vorgänge kann ein Kurzschluss zwischen den Elektroden entstehen und die Selbstentladung der Batterie oder des Kondensators stark beschleunigt werden.

Bei einem Kurzschluss können lokal sehr hohe Ströme fließen, wodurch Wärme freigesetzt wird. Diese Wärme kann zum Schmelzen des Separators führen, wodurch wiederum die isolierende Wirkung des Separators deutlich nachlassen kann. Eine sich sehr schnell selbst entladende Batterie birgt dadurch auf Grund ihres hohen Energieinhaltes sowie der Brennbarkeit des Elektrolyten und anderer Bestandteile ein hohes Sicherheitsrisiko.

Ein weiterer Nachteil der aus dem Stand der Technik bekannten Separatoren ist deren mangelnde Beständigkeit bei steigenden Temperaturen. Der Schmelzpunkt bei Verwendung von Polyethylen liegt bei rund 130°C bzw. rund 150°C bei Verwendung von Polypropylen.

Als Ursachen für Kurzschlüsse können Schrumpf des Separators durch zu hohe Temperatur in der Batterie, Metalldendritenwachstum durch Reduktion von Metallionen (Lithium, Eisen, Mangan oder sonstige metallische Verunreinigungen), Abrieb von Elektrodenpartikeln, Schneidabrieb bzw. gebrochener Elektrodenbelag und unmittelbarer Kontakt der beiden flachen Elektroden unter Druck genannt werden.

In der EP 0 892 448 A2 ist der sogenannte "Shut down"-Mechanismus offenbart. Dieser wirkt bei lokaler Erwärmung durch beispielsweise einen Kurzschluss dessen flächiger Ausbreitung entgegen, indem die Ionenleitung in der Nähe des anfänglichen Kurzschlusses unterdrückt wird. Durch die Verlustwärme des Kurzschlusses wird Polyethylen so weit erhitzt, dass es schmilzt und die Poren des Separators verschließt. Höher schmelzendes Polypropylen bleibt mechanisch intakt.

Die US 2002/0168569 A1 beschreibt den Aufbau eines Separators bestehend aus Polyvinyldifluorid, welches im Herstellungsprozess mit einem Lösemittel angelöst, mit Siliziumdioxid-Partikeln vermengt und als dünner Film ausgebracht wird. Beim Entfernen des Lösemittels bleibt eine poröse Membran zurück.

Die WO 2006/068428 A1 beschreibt die Herstellung von Separatoren für Lithium-Ionen-Batterien unter Verwendung eines Polyolefin-Separators der zusätzlich mit gelartigen Polymeren und anorganischen Partikel gefüllt wird.

Die WO 20041021475 A1 beschreibt den Einsatz von keramischen Partikeln, die über silizium-organische Haftvermittler und anorganische Bindemittel aus Oxiden der Elemente Silizium, Aluminium und/oder Zirkon zu einer dünnen Flächenware ausgeformt werden.

Um eine ausreichende mechanische Flexibilität einzustellen, werden die Keramikpartikel in ein Stützmaterial, beispielsweise einen Vliesstoff eingebracht. Dies offenbart die WO 2005/038959 A1.

Um Kurzschlüsse im Anfangsstadium der Metalldendritenbildung zu unterbinden, wird in der WO 2005/104269 A1 der Einsatz von niederschmelzenden Wachsen als Beimengung zu einer Keramikpaste beschrieben.

In der WO 2007/028662 A1 wird der Zusatz von Polymerpertikeln mit einem Schmelzpunkt von über 100° C zu keramischen Füllstoffen beschrieben, um die mechanischen Eigenschaften des Separators zu verbessern. Die beschriebenen Materialien sollen als Separator für Lithium-Ionen Materialien dienen. Obwohl mit diesen Separatoren eine höhere Temperaturbeständigkeit im Vergleich zu Membranen erzielt werden kann, können sie sich noch nicht kommerziell durchsetzen. Dies kann einerseits an den relativ hohen Kosten und andererseits an der zu hohen Materialdicke liegen, welche über 25 µm liegt.

Die WO 2000/024075 A1 beschreibt die Herstellung einer Membran, die in Brennstoffzellen eingesetzt werden kann. Diese besteht aus Glasfasermaterialien, in welchen mittels eines Silikatbinders Fluorkohlenwasserstoffpolymere fixiert werden.

Schließlich beschreibt die JP 2005268096 A einen Separator für Li-Ionen Batterien, der durch das Zusammenschmelzen von thermoplastischen Partikeln in einem Polyethylen/Polypropylen Faserstützmaterial durch Erhitzung dargestellt wird. Dieser besitzt eine blasenförmige Porenstruktur mit einem Porendurchmesser von 0.1 - 15 µm.

Der Stand der Technik zeigt jedoch keinen kostengünstigen Separator, der bei geringer Dicke eine hohe Porosität und eine hohe Temperaturstabilität zeigt und in Batterien mit hoher Leistungs- und Energiedichte über einen weiten Temperaturbereich bei hohen Sicherheitsanforderungen einsetzbar ist.

### Darstellung der Erfindung

Der Erfindung liegt daher die Aufgabe zu Grunde, eine Lage der eingangs genannten Art derart auszugestalten und weiterzubilden, dass sie nach kostengünstiger Fertigung bei geringer Dicke eine hohe Porosität und hohe Temperaturstabilität aufweist.

Die vorliegende Erfindung löst die zuvor genannte Aufgabe durch die Merkmale des Patentanspruchs 1.

Die Häufigkeitsverteilung der mittleren Porengrößen wird erfindungsgemäß derart eingestellt, dass mehr als 50 % der zweiten Poren mittlere Porengrößen zeigen, die unterhalb des mittleren Durchmessers der Partikel liegen. Erfindungsgemäß ist erkannt worden, dass die Porenstruktur eines kostengünstigen Vliesstoffs durch geeignete Anordnung und Auswahl von Partikeln modifiziert werden kann. Ganz konkret ist erkannt worden, dass die Porosität der erfindungsgemäßen Lage im Vergleich zu Polyolefin-Membranen gesteigert werden kann, ohne deren Stabilität zu vermindern. Die Anordnung einer Vielzahl von Partikeln, deren mittlerer Durchmesser größer als die mittlere Porengröße der Mehrzahl der zweiten Poren im befüllten Bereich ist, erlaubt die Ausbildung einer hohen Porosität und damit eine begünstigte Elektrolyt-Aufnahme durch den Vliesstoff. Zugleich wird eine Porenstruktur geschaffen, in der sich nahezu keine schädlichen Metalldendriten ausbilden können. Durch die erfindungsgemäße Anordnung der Partikel kann eine Porenstruktur erzeugt werden, die nicht blasenartig, sondern labyrinthartig ist und gestreckte Poren aufweist. Bei einer solchen Porenstruktur können sich dendritartige Durchwachsungen nahezu nicht von einer Seite der Lage zur anderen Seite durchgängig ausbilden. Insoweit werden Kurzschlüsse in Batterien oder Kondensatoren wirksam verhindert. Die erfindungsgemäße Lage eignet sich daher besonders als Separator für Batterien und Kondensatoren mit hoher Leistungs- und Energiedichte. Die erfindungsgemäße Lage ist über einen weiten Temperaturbereich bei hohen Sicherheitsanforderungen einsetzbar.

Die Partikel sind im Grundkörper flächig homogen verteilt. Durch diese konkrete Ausgestaltung können Kurzschlüsse besonders wirksam verhindert werden. Metalldendriten und Abrieb können durch eine homogen belegte Fläche nahezu nicht hindurchwandern. Des Weiteren wird der unmittelbare Kontakt von Elektroden bei Druckbeaufschlagung durch eine solche Fläche vermieden. Vor diesem Hintergrund ist konkret denkbar, dass sämtliche erste Poren des Vliesstoffes homogen derart mit den Partikeln ausgefüllt sind, dass die Lage vorliegend mittlere Porengrößen zeigt, die kleiner sind als die mittleren Durchmesser der Partikel.

Der Grundkörper weist eine Beschichtung aus den Partikeln auf. Eine Beschichtung bewirkt ebenfalls vorteilhaft die zuvor genannte Unterdrückung von Kurzschlüssen. Wenn eine Lage mit einer Beschichtung versehen ist, tritt zwangsläufig ein Grenzbereich am Grundkörper auf, der zumindest teilweise mit Partikeln gefüllt ist.

Vor diesem Hintergrund werden Mischungen aus Partikeln mit unterschiedlichen Schmelzpunkten verwendet. Hierdurch kann ein schrittweises oder stufenweises Verschließen der Poren mit zunehmender Temperatur bewirkt werden.

Die Partikel sind aus organischen Polymeren, insbesondere aus Polypropylen, Polyvinylpyrrolidon, Polyvinylidenfluorid, Polyester, Polytetrafluorethylen, Perfluor-Ethylen-Propylen (FEP), Polystyrol, Styrolbutadiencopolymeren, Polyacrylaten oder Nitrilbutadienpolymeren sowie Copolymeren der zuvor genannten Polymere gefertigt. Die Verwendung organischer Polymere für die Partikel erlaubt ein problemloses Aufschmelzen der Partikel zur Erzielung eines "Shut-Down-Effektes". Des Weiteren kann eine Lage gefertigt werden, die sich problemlos zuschneiden lässt, ohne zu zerbröseln. Ein Zerbröseln der Lage tritt meist dann auf, wenn ein relativ hoher Anteil an anorganischen Partikeln in der Lage vorliegt. Vor diesem Hintergrund ist denkbar, Mischungen unterschiedlicher Partikel oder Core-Shell-Partikel zu verwenden. Hierdurch kann ein schrittweises oder stufenweises Verschließen der Poren mit zunehmender Temperatur bewirkt werden.

Die Lage zeigt eine Höchstzugkraft in Längsrichtung von mindestens 15 Newton/5cm. Eine Lage dieser Festigkeit lässt sich besonders problemlos auf die Elektroden einer Batterie aufwickeln, ohne zu zerreißen.

Durch eine Kalandrierung ist die Lage mechanisch verfestigt. Die Kalandrierung bewirkt eine Reduzierung der Oberflächenrauhigkeit. Die an der Oberfläche des Vliesstoffs eingesetzten Partikel zeigen nach der Kalandrierung Abplattungen.

Der Schmelzpunkt der Partikel liegt unter den Schmelzpunkten der Fasern des Vliesstoffs. Durch die Auswahl solcher Partikel kann die Lage einen so genannten "Shut-Down-Mechanismus" realisieren. Bei einem "Shut-Down-Mechanismus" verschließen die aufschmelzenden Partikel die Poren des Vliesstoffs, so dass keine dendritartigen Durchwachsungen durch die Poren und somit Kurzschlüsse auftreten können.

Folglich ist die eingangs genannte Aufgabe gelöst.

Die Partikel könnten kugelförmig sein. Hierdurch kann vorteilhaft eine überwiegend dichteste Kugelpackung in den ersten Poren des Vliesstoffs erzeugt werden. Die mittlere Porengröße der Mehrzahl der zweiten Poren wird im wesentlichen durch geometrischen Verhältnisse in Kugelpackungen bestimmt. Es gibt unendlich viele Möglichkeiten, eine dichteste Kugelpackung herzustellen. Gemein ist ihnen, dass sie aus hexagonalen Kugel-Schichten bestehen. Die zwei wichtigsten Vertreter sind die hexagonal dichteste Kugelpackung (Schichtfolge A, B, A, B, A, B) und die kubisch dichteste Kugelpackung (Schichitfolge A, B, C, A, B, C, A). Die kubisch dichteste Kugelpackung wird auch kubisch flächenzentrierte Kugelpackung genannt. In einer dichtesten Kugelpackung hat jede Kugel 12 nächste Nachbarn, sechs in der eigenen Schicht, sowie drei je darüber und darunter. Sie bilden bei der kubischen Packung einen Kuboktaeder, bei der hexagonalen einen Antikuboktaeder. Der Raumfüllungsgrad einer dichtesten Kugelpackung beträgt 74%. Es wird jedoch angestrebt, eine möglichst hohe Porosität zu erzeugen. Daher werden nicht alle Partikel in den ersten Poren des Vliesstoffs eine dichteste Kugelpackung ausbilden. Vielmehr werden auch Zonen loser Schüttung der Partikel auftreten, wodurch eine hohe Porosität begünstigt wird.

Die Partikel könnten durch einen Binder mit dem Vliesstoff bzw. untereinander verbunden sein. Dabei könnte der Binder aus organischen Polymeren bestehen. Die Verwendung eines Binders aus organischen Polymeren erlaubt es, eine Lage mit ausreichender mechanischer Flexibilität herzustellen. Ausgezeichnete Bindereigenschaften zeigt überraschenderweise Polyvinylpyrrolidon.

Bevorzugt könnten thermoplastische und/oder duroplastische Binder verwendet werden. Beispielhaft seien vor diesem Hintergrund Polyvinylpyrrolidon, Polyacrylsäure, Polyacrylate, Polymethacrylsäure, Polymethacrylate, Polystyrol, Polyvinylalkohol, Polyvinylacetat, Polyacrylamid und Copolymere aus den vorgenannten, Cellulose und deren Derivate, Polyether, Phenolharze, Melaminharze, Polyurethane, Nitrilkautschuk (NBR), Styrolbutadienkautschuk (SBR) sowie Latex genannt.

Der Schmelzpunkt des Binders könnte unter den Schmelzpunkten der Fasern des Vliesstoffs liegen. Durch die Auswahl eines solchen Binders kann die Lage einen so genannten "Shut-Down-Mechanismus" realisieren. Bei einem "Shut-Down-Mechanismus" verschließt der Binder die Poren des Vliesstoffs, so dass keine dendritartigen Durchwachsungen durch die Poren und somit Kurzschlüsse auftreten können.

Die Partikel könnten einen mittleren Durchmesser im Bereich von 0,01 bis 10 µm aufweisen. Die Auswahl des mittleren Durchmessers aus diesem Bereich hat sich als besonders vorteilhaft erwiesen, um Kurzschlüsse durch Ausbildung von dendritartigen Durchwachsungen oder Abrieb zu vermeiden.

Denkbar ist auch, anorganische Partikel oder anorganisch-organische Hybridpartikel einzusetzen. Diese Partikel schmelzen nicht unterhalb einer Temperatur von 400° C. Des Weiteren können diese Partikel mit basischen Eigenschaften gewählt werden, um die in Batterien vorliegende Protonenaktivität zumindest teilweise zu vermindern.

Die Fasern des Vliesstoffs könnten aus organischen Polymeren, insbesondere aus Polybutylterephtalat, Polyethylenterephtalat, Polyacrylnitril, Polyvinylidenfluorid, Polyetheretherketonen, Polyethylennaphtalat, Polysulfonen, Polyimid, Polyester, Polypropylen, Polyoxymethylen, Polyamid oder Polyvinylpyrrolidon gefertigt sein. Denkbar ist auch, Bikomponentenfasern einzusetzen, welche die zuvor genannten Polymere aufweisen. Die Verwendung dieser organischen Polymere erlaubt es, eine Lage herzustellen, die nur einen geringen thermischen Schrumpf zeigt. Des Weiteren sind diese Materialien weitgehend elektrochemisch stabil gegenüber den in Batterien und Kondensatoren eingesetzten Elektrolyten und Gasen.

Die mittlere Länge der Fasern des Vliesstoffs könnte deren mittleren Durchmesser um mindestens das zweifache, vorzugsweise ein Vielfaches übersteigen. Durch diese konkrete Ausgestaltung kann ein besonders reißfester Vliesstoff gefertigt werden, da die Fasern miteinander verschlungen werden können.

Mindestens 90% der Fasern des Vliesstoffs könnten einen mittleren Durchmesser von höchstens 12 µm aufweisen. Diese konkrete Ausgestaltung erlaubt den Aufbau einer Lage mit relativ geringen Porengrößen der ersten Poren. Eine noch feinere Porosität kann dadurch erzielt werden, dass mindestens 40% der Fasern des Vliesstoffs einen mittleren Durchmesser von höchstens 8 µm aufweisen.

Die Lage könnte durch eine Dicke von höchstens 100 µm gekennzeichnet sein. Eine Lage dieser Dicke lässt sich noch problemlos aufwickeln und erlaubt einen sehr sicheren Batteriebetrieb. Bevorzugt könnte die Dicke höchstens 60 µm betragen. Diese Dicke erlaubt eine verbesserte Aufwickelbarkeit und dennoch einen sicheren Batteriebetrieb. Besonders bevorzugt könnte die Dicke höchstens 25 µm betragen. Mit Lagen einer solchen Dicke können sehr kompakt bauende Batterien und Kondensatoren gebaut werden.

Die Lage könnte eine Porosität von mindestens 25 % aufweisen. Eine Lage dieser Porosität unterdrückt aufgrund ihrer Materialdichte besonders effektiv die Ausbildung von Kurzschlüssen. Bevorzugt könnte die Lage eine Porosität von mindestens 35 % aufweisen. Durch eine Lage dieser Porosität kann eine Batterie mit hoher Leistungsdichte erzeugt werden. Die hier beschriebene Lage zeigt bei hoher Porosität dennoch sehr kleine zweite Poren, so dass sich keine dendritartigen Durchwachsungen von einer Seite zur anderen Seite der Lage ausbilden können. Vor diesem Hintergrund ist denkbar, dass die zweiten Poren ein labyrinthartiges Gefüge ausbilden, in dem sich keine dendritartigen Durchwachsungen von einer Seite zur anderen Seite der Lage ausbilden können.

Die Lage könnte Porengrößen von höchstens 3 µm aufweisen. Die Auswahl dieser Porengröße hat sich als besonders vorteilhaft erwiesen, um Kurzschlüsse zu vermeiden. Besonders bevorzugt könnten die Porengrößen höchstens 1 µm betragen. Eine solche Lage vermeidet besonders vorteilhaft Kurzschlüsse durch Metalldendritenwachstum, durch Abrieb aus Elektrodenpartikeln und durch unmittelbaren Kontakt der Elektroden bei Druckbeaufschlagung.

Die hier beschriebene Lage kann insbesondere in Batterien und Kondensatoren als Separator eingesetzt werden, da sie Kurzschlüsse besonders wirksam verhindert.

Sie kann auch in Brennstoffzellen als Gasdiffusionsschicht oder Membran Verwendung finden, da sie gute Benetzungseigenschaften zeigt und Flüssigkeiten transportieren kann.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche, andererseits auf die nachfolgende Erläuterung eines bevorzugten Ausführungsbeispiels der Erfindung anhand der Zeichnung zu verweisen.

In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Rasterelektronenmikroskop-Aufnahme einer Lage, in welcher die Partikel in ersten Poren eines Vliesstoffs vorliegen und einen porösen mit Partikeln befüllten Bereich ausbilden,
- Fig. 2: eine Rasterelektronenmikroskop-Aufnahme der Partikel eines befüllten Bereichs, der als Beschichtung ausgebildet ist, und
- Fig. 3: eine stark vergrößerte Rasterelektronenmikroskop-Aufnahme der Partikel eines befüllten Bereichs.

### Ausführung der Erfindung

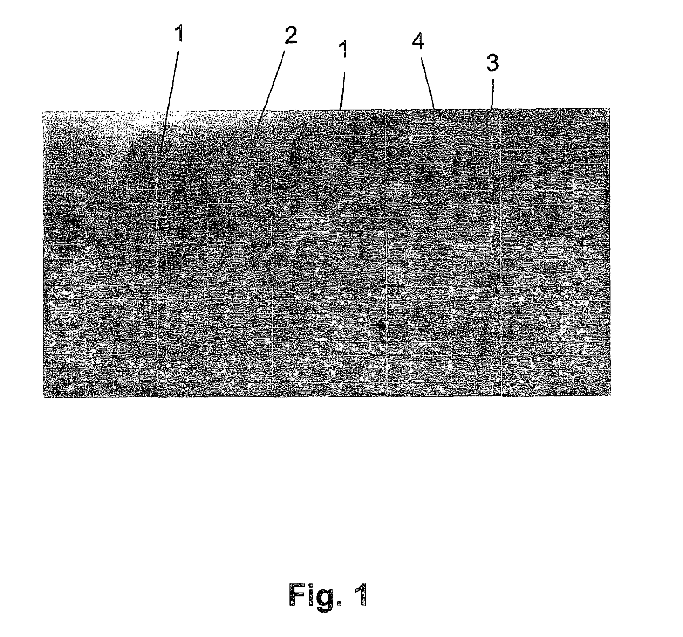

Fig. 1 zeigt eine Lage mit einem Grundkörper aus Vliesstoff, wobei der Grundkörper aus Fasern 1 besteht und erste durch die Fasern 1 gebildete Poren 2 aufweist, wobei der Grundkörper zumindest teilweise mit Partikeln 3 befüllt ist und wobei die Partikel 3 die ersten Poren 2 zumindest teilweise ausfüllen und mit Partikeln 3 befüllte Bereiche 4 ausbilden.

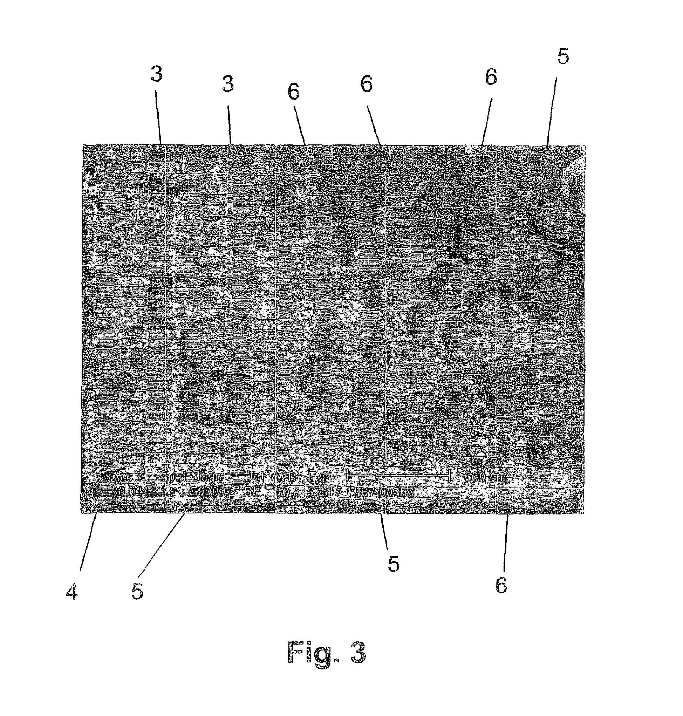

Die Fig. 3 zeigt einen befüllten Bereich 4 in einer vergrößerten Ansicht, Mit Bezug auf Fig. 3 bilden die Partikel 3 in den befüllten Bereichen 4 zweite Poren 5 aus, wobei der mittlere Durchmesser der Partikel 3 größter als die mittlere Porengröße der Mehrzahl der zweiten Poren 5 ist. Die Partikel 3 sind kugelförmig und neigen bereichsweise zur Ausbildung einer dichtesten Kugelpackung.

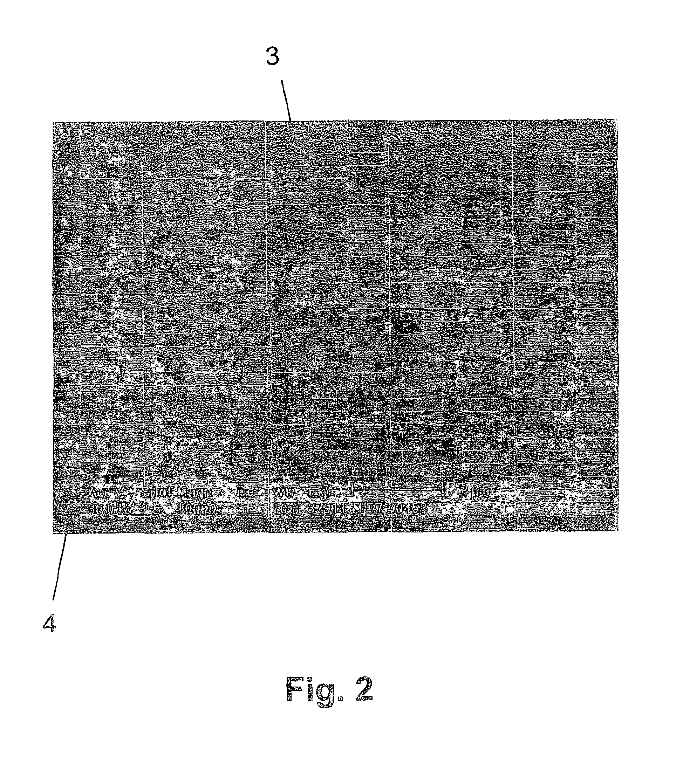

Fig. 2 zeigt eine Beschichtung aus den Partikeln 3, die auf dem Vliesstoff aufgebracht ist.

Die Fig. 1 bis 3 zeigen Rasterelektronenmikroskop-Aufnahmen einer Lage mit einem Vliesstoff, dessen Fasern 1 aus Polyester gefertigt sind. Die Partikel 3 sind kugelförmig ausgebildet und bilden bereichsweise Agglomerate, welche die ersten Poren 2 des Vliesstoffs ausfüllen. Die Fasern 1 zeigen einen mittleren Durchmesser von weniger als 12 µm. Die Lage weist eine Dicke von 25 µm auf. Sie zeigt einen Schrumpf in Querrichtung von weniger als 1 % bei einer Temperatur von 170° C.

Der mittlere Durchmesser der Partikel 3 beträgt 200 nm. Die Partikel 3 bestehen aus Polyvinylidenfluorid und wurden durch einen Binder aus Polyvinylpyrrolidon an den Fasern 1 befestigt.

Der mittlere Durchmesser der Partikel 3 wird aus der Anzahl der Partikel 3 in dem befüllten Bereich 4 ermittelt. Bevorzugt zeigen die Partikel 3 eine enge Verteilungskurve, das heisst einen mittleren Durchmesser mit geringer Standardabweichung. Die mittleren Porengrößen der meisten, nämlich der Mehrzahl, der zweiten Poren 5 ist geringer als 200 nm. Unter mittlerer Porengröße einer zweiten Pore 5 wird der Durchmesser einer fiktiven Kugel 6 verstanden, welche das gleiche Volumen wie die Pore 5 aufweist. Die fiktive Kugel 6 liegt derart zwischen den Partikeln 3, dass sie die Oberflächen der benachbarten Partikel 3 berührt. Fiktive Kugeln 6, welche die Dimension der Poren 5 kennzeichnen, sind in Fig. 3 als schwarz-umrandete Hohlkreise dargestellt.

Eine Verteilungskurve, deren x-Achse die mittleren Porengrößen der zweiten Poren 5 und deren y-Achse die Anzahl bzw. Häufigkeit der mittleren Porengrößen zeigt, würde belegen, dass mehr als 50% der zweiten Poren 5 mittlere Porengrößen zeigen, die unterhalb von 200 nm liegen.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

## Patentansprüche

1. Lage mit einem Grundkörper aus Vliesstoff, wobei der Grundkörper aus Fasern (1) besteht und erste durch die Fasern (1) gebildete Poren (2) aufweist, wobei der Grundkörper zumindest teilweise mit Partikeln (3) befüllt ist, wobei die Partikel (3) die ersten Poren (2) zumindest teilweise ausfüllen und mit Partikeln (3) befüllte Bereiche (4) ausbilden, wobei die Partikel (3) in den befüllten Bereichen (4) zweite Poren (5) ausbilden, wobei der mittlere Durchmesser der Partikel (3) größer als die mittlere Porengröße der Mehrzahl der zweiten Poren (5) ist, wobei zumindest ein Teil der befüllten Bereiche (4) als Beschichtung des Grundkörpers mit den Partikeln (3) ausgebildet ist und wobei die Lage eine Höchstzugkraft von mindestens 15 N/5cm in Längsrichtung zeigt, wobei
der Grundkörper kalandriert ist, wobei die Partikel (3) im Grundkörper flächig homogen verteilt sind, und wobei die Partikel (3) aus organischen Polymeren gefertigt sind, die aus der Gruppe Polypropylen, Polyvinylpyrroildon, Polyvinylidenfluorid, Polyester, Polytetrafluorethylen, Perfluor-Ethylen-Propylen (FEP), Polystyrol, Styrolbutadiencopolymere, Polyacrylat oder Nitrilbutadienpolymere sowie Copolymere der zuvor genannten Polymere ausgewählt sind, **dadurch gekennzeichnet, dass** Mischungen aus Partikeln mit unterschiedlichen Schmelzpunkten derart verwendet sind, dass ein schrittweises oder stufenweises Verschließen der Poren mit zunehmender Temperatur bewirkt wird und wobei der Schmelzpunkt der Partikel unter den Schmelzpunkten der Fasern des Vliesstoffs liegt.

2. Lage nach Anspruch 1, **dadurch gekennzeichnet, dass** die Partikel (3) kugelförmig ausgebildet sind.

3. Lage nach Anspruch 1 oder 2, **dadurch gekennzeichnet, dass** die Partikel (3) durch einen Binder aus organischen Polymeren mit dem Vliesstoff verbunden sind, die aus der Gruppe Polyvinylpyrrolidon, Polyacrylsäure, Polyacrylat, Polymethacrylsäure, Polymethacrylat, Polystyrol, Polyvinylalkohol, Polyvinylacetat, Polyacrylamid und Copolymere aus den vorgenannten, Cellulose und deren Derivate, Polyether, Phenolharz, Melaminharz, Polyurethan, Nitrilkautschuk (NBR), Styrolbutadienkautschuk (SBR) sowie Latex ausgewählt sind.

4. Lage nach einem der Ansprüche 1 bis 3, **dadurch gekennzeichnet, dass** der Schmelzpunkt des Binders unter den Schmelzpunkten der Partikel (3) und/ oder der Fasern (1) liegt.

5. Lage nach einem der Ansprüche 1 bis 4, **dadurch gekennzeichnet, dass** die Partikel (3) einen mittleren Durchmesser im Bereich von 0,01 und 10 µm aufweisen.

6. Lage nach einem der Ansprüche 1 bis 5, **dadurch gekennzeichnet, dass** die Fasern (1) des Vliesstoffs aus organischen Polymeren gefertigt sind, die aus der Gruppe Polybutylterephtalat, Polyethylenterephtalat, Polyacrylnitril, Polyvinylidenfluorid, Polyetheretherketon, Polyethylennaphtalat, Polysulfon, Polyimid, Polyester, Polypropylen, Polyoxymethylen, Polyamid oder Polyvinylpyrrolidon ausgewählt sind.

7. Lage nach einem der Ansprüche 1 bis 6, **dadurch gekennzeichnet, dass** die mittlere Länge der Fasern (1) des Vliesstoffs deren mittleren Durchmesser um mindestens das zweifache, vorzugsweise ein vielfaches, übersteigt.

8. Lage nach einem der Ansprüche 1 bis 7, **dadurch gekennzeichnet, dass** mindestens 90% der Fasern (1) des Vliesstoffs einen mittleren Durchmesser von höchstens 12 µm aufweisen.

9. Lage nach einem der Ansprüche 1 bis 8, **dadurch gekennzeichnet, dass** mindestens 40% der Fasern (1) des Vliesstoffs einen mittleren Durchmesser von höchstens 8 µm aufweisen.

10. Lage nach einem der Ansprüche 1 bis 9, **gekennzeichnet durch** eine Dicke von höchstens 100 µm, bevorzugt von höchstens 60 µm und besonders bevorzugt von 25 µm.

11. Lage nach einem der Ansprüche 1 bis 10, **gekennzeichnet durch** eine Porosität von mindestens 25 %, bevorzugt von mindestens 35 %.

12. Lage nach einem der Ansprüche 1 bis 11, **dadurch gekennzeichnet, dass** die ersten und die zweiten Poren (2, 5) ein labyrinthartiges Gefüge ausbilden.

13. Lage nach einem der Ansprüche 1 bis 12, **gekennzeichnet durch** eine Porengröße der zweiten Poren (5) von höchstens 3 µm, bevorzugt von höchstens 1 µm.

## Claims

1. Ply having a foundational structure composed of a fibrous nonwoven web fabric, the foundational structure consisting of fibres (1) and having first pores (2) formed by the fibres (1), the foundational structure being at least partially filled with particles (3), the particles (3) at least partially filling the first pores (2) and forming regions (4) filled with particles (3), the particles (3) in the filled regions (4) forming second pores (5), the average diameter of the particles (3) being greater than the average pore size of the majority of the second pores (5), at least a portion of the filled regions (4) being configured as a coating of the foundational structure with the particles (3) and the ply having an ultimate tensile strength force of at least 15 N/5 cm in the longitudinal direction, the foundational structure being calendered, the particles (3) forming a sheetlike homogeneous distribution in the foundational structure, and the particles (3) being fabricated from organic polymers selected from the group consisting of polypropylene, polyvinylpyrrolidone, polyvinylidene fluoride, polyester, polytetrafluoroethylene, perfluoro-ethylenepropylene (FEP), polystyrene, styrene-butadiene copolymers, polyacrylate and nitrile-butadiene polymers and copolymers of the aforementioned polymers, **characterized in that** mixtures of particles having different melting points have been used such that stepwise or stagewise blinding of the pores with increasing temperature is achieved and wherein the melting point of the particles is below the melting points of the fibres of the fibrous nonwoven web fabric.

2. Ply according to Claim 1, **characterized in that** the particles (3) are spherical in configuration.

3. Ply according to Claim 1 or 2, **characterized in that** the particles (3) are united with the fibrous nonwoven web fabric via a binder composed of organic polymers selected from the group consisting of polyvinylpyrrolidone, polyacrylic acid, polyacrylate, polymethacrylic acid, polymethacrylate, polystyrene, polyvinyl alcohol, polyvinyl acetate, polyacrylamide and copolymers of the aforementioned, cellulose and its derivatives, polyethers, phenolic resin, melamine resin, polyurethane, nitrile rubber (NBR), styrene-butadiene rubber (SBR) and also latex.

4. Ply according to any one of Claims 1 to 3, **characterized in that** the melting point of the binder is below the melting points of the particles (3) and/or the fibres (1).

5. Ply according to any one of Claims 1 to 4, **characterized in that** the particles (3) have an average diameter in the range from 0.01 to 10 µm.

6. Ply according to any one of Claims 1 to 5, **characterized in that** the fibres (1) of the fibrous nonwoven web fabric are fabricated from organic polymers selected from the group consisting of polybutylene terephthalate, polyethylene terephthalate, polyacrylonitrile, polyvinylidene fluoride, polyether ether ketone, polyethylene naphthalate, polysulphone, polyimide, polyester, polypropylene, polyoxymethylene, polyamide and polyvinylpyrrolidone.

7. Ply according to any one of Claims 1 to 6, **characterized in that** the average length of the fibres (1) of the fibrous nonwoven web fabric exceeds their average diameter by at least a factor of two or more, preferably by a multiple.

8. Ply according to any one of Claims 1 to 7, **characterized in that** at least 90% of the fibres (1) of the fibrous nonwoven web fabric have an average diameter of not more than 12 µm.

9. Ply according to any one of Claims 1 to 8, **characterized in that** at least 40% of the fibres (1) of the fibrous nonwoven web fabric have an average diameter of not more than 8 µm.

10. Ply according to any one of Claims 1 to 9, **characterized by** a thickness of not more than 100 µm, preferably of not more than 60 µm and more preferably of 25 µm.

11. Ply according to any one of Claims 1 to 10, **characterized by** a porosity of at least 25%, preferably of at least 35%.

12. Ply according to any one of Claims 1 to 11, **characterized in that** the first and second pores (2, 5) form a labyrinthine microstructure.

13. Ply according to any one of Claims 1 to 12, **characterized by** a pore size of not more than 3 µm and preferably of not more than 1 µm for the second pores (5).

## Revendications

1. Couche comprenait un corps de base composé d'un non-tissé, le corps de base étant constitué de fibres (1) et présentant des premiers pores (2) formés par les fibres (1), le corps de base étant rempli au moins en partie avec des particules (3), les particules (3) remplissant au moins en partie les premiers pores (2) et formant des zones (4) remplies de particules (3), les particules (3) formant des seconds pores (5) dans les zones remplies (4), le diamètre moyen des particules (3) étant supérieur à la taille de pore moyenne de la majorité des seconds pores (5), au moins une partie des zones remplies (4) étant sous la forme d'un revêtement du corps de base avec les particules (3) et la couche présentant une force de traction maximale d'au moins 15 N/5 cm dans la direction longitudinale, le corps de base étant calandré, les particules (3) étant réparties de manière laminaire homogène dans le corps de base, et les particules (3) étant fabriquées en polymères organiques, qui sont choisis dans le groupe constitué par le polypropylène, la polyvinylpyrrolidone, le polyfluorure de vinylidène, le polyester, le polytétrafluoroéthylène, le perfluoro-éthylènepropylène (FEP), le polystyrène, les copolymères styrène-butadiène, le polyacrylate ou les polymères de nitrile-butadiène, ainsi que les copolymères des polymères susmentionnés, **caractérisée en ce que** des mélanges de particules de points de fusion différents sont utilisés de manière à effectuer une fermeture graduelle ou par étapes des pores lorsque la température augmente, et le point de fusion des particules se situant en dessous des points de fusion des fibres du non-tissé.

2. Couche selon la revendication 1, **caractérisée en ce que** les particules (3) sont sous forme sphérique.

3. Couche selon la revendication 1 ou 2, **caractérisée en ce que** les particules (3) sont reliées avec le non-tissé par un liant en polymères organiques, qui sont choisis dans le groupe constitué par la polyvinylpyrrolidone, l'acide polyacrylique, le polyacrylate, l'acide polyméthacrylique, le polyméthacrylate, le polystyrène, l'alcool polyvinylique, le polyacétate de vinyle, le polyacrylamide et leurs copolymères, la cellulose et ses dérivés, le polyéther, la résine de phénol, la résine de mélamine, le polyuréthane, le caoutchouc de nitrile (NBR), le caoutchouc de styrène-butadiène (SBR), ainsi que le latex.

4. Couche selon l'une quelconque des revendications 1 à 3, **caractérisée en ce que** le point de fusion du liant se situe sous les points de fusion des particules (3) et/ou des fibres (1).

5. Couche selon l'une quelconque des revendications 1 à 4, **caractérisée en ce que** les particules (3) présentent un diamètre moyen dans la plage allant de 0,01 à 10 µm.

6. Couche selon l'une quelconque des revendications 1 à 5, **caractérisée en ce que** les fibres (1) du non-tissé sont fabriquées en polymères organiques, qui sont choisis dans le groupe constitué par le polybutyltéréphtalate, le polyéthylène téréphtalate, le polyacrylonitrile, le polyfluorure de vinylidène, la polyétheréthercétone, le polyéthylène naphtalate, la polysulfone, le polyimide, le polyester, le polypropylène, le polyoxyméthylène, le polyamide ou la polyvinylpyrrolidone.

7. Couche selon l'une quelconque des revendications 1 à 6, **caractérisée en ce que** la longueur moyenne des fibres (1) du non-tissé dépasse leur diamètre moyen d'un facteur d'au moins deux, de préférence d'un facteur de quatre.

8. Couche selon l'une quelconque des revendications 1 à 7, **caractérisée en ce qu'**au moins 90 % des fibres (1) du non-tissé présentent un diamètre moyen d'au plus 12 µm.

9. Couche selon l'une quelconque des revendications 1 à 8, **caractérisée en ce qu'**au moins 40 % des fibres (1) du non-tissé présentent un diamètre moyen d'au plus 8 µm.

10. Couche selon l'une quelconque des revendications 1 à 9, **caractérisée par** une épaisseur d'au plus 100 µm, de préférence d'au plus 60 µm et de manière particulièrement préférée de 25 µm.

11. Couche selon l'une quelconque des revendications 1 à 10, **caractérisée par** une porosité d'au moins 25 %, de préférence d'au moins 35 %.

12. Couche selon l'une quelconque des revendications 1 à 11, **caractérisée en ce que** les premiers et les seconds pores (2, 5) forment une structure en labyrinthe.

13. Couche selon l'une quelconque des revendications 1 à 12, **caractérisée par** une taille de pore des seconds pores (5) d'au plus 3 µm, de préférence d'au plus 1 µm.
